# EUROPEAN PATENT APPLICATION

(11) **EP 4 415 409 A1**
(43) Date of publication of application: **14.08.2024**
(21) Application number: 23156304.0
(22) Date of filing: 13.02.2023
(51) Int. Cl.: H04W 12/50, H04W 4/48, H04W 8/00

(54) **COMMUNICATION SYSTEM AND METHOD**

(71) Applicant: Bayerische Motoren Werke Aktiengesellschaft, 80809 München (DE)
(72) Inventor: Urban, Tomas, 83607 Holzkirchen (DE)

(57) **Abstract**

The present disclosure relates to a communication system (100) for a vehicle (102). The communication system (100) comprises a first wireless communication device (110) configured to perform wireless communication in accordance with a first wireless communication protocol. The communication system (100) comprises a second wireless communication device (120) configured to perform wireless communication in accordance with a second wireless communication protocol. The communication system (100) comprises control circuitry (140) configured to perform a first pairing procedure between the first wireless communication device (110) and a mobile device (130) to establish a first communication channel in accordance with the first wireless communication protocol between the first wireless communication device (110) and the mobile device (130). The control circuitry (140) is also configured to initiate a second pairing procedure between the second wireless communication device (120) and the mobile device (130) to establish a second communication channel in accordance with the second wireless communication protocol between the second wireless communication device (120) and the mobile device (120) by sending a pairing preparation message (306) for the second pairing procedure from the first wireless communication device (110) to the mobile device (130) via the first communication channel. The control circuitry (140)) is configured to instruct sending the pairing preparation message (306) if it is detected that the second communication channel can be successfully established.

## Description

The present disclosure relates to the field of pairing a wireless communication device with a plurality of other wireless communication devices. In particular, the present disclosure relates pairing a mobile wireless communication device, such as a smartphone, with a first and a second wireless communication device of a vehicle.

The Car Connectivity Consortium (CCC) is an industry group that is dedicated to creating standards for smartphone-to-car connectivity with the goal of making it easier for drivers to use their smartphones in their cars. The CCC works on technologies such as the Digital Key standard which allows for the use of smartphones as a key for cars, and the Car Data specification which enables communication between cars and other devices.

The Digital Key standard uses near field communication (NFC), Bluetooth Low Energy (BLE), or Ultra-Wideband (UWB) to enable a secure, wireless connection between a mobile device (e.g., a smartphone) and the car, which allows the driver to unlock and start the car without using a traditional mechanical key. The digital key can also be shared with other people (friends) through a smartphone app, allowing them to also use the car. This allows for a more convenient and secure way of sharing access to a vehicle, as well as enabling new use cases such as car sharing and rental services.

Digital Key Owner Pairing and head unit pairing are two different processes that are used to connect a smartphone to a car.

Digital Key Owner Pairing refers to the process of connecting a smartphone to a car in order to use it as a digital key. This process typically involves the car owner using their smartphone to establish a secure and authenticated connection between the phone and the car's onboard system, usually through a specific app or software. Once the pairing is complete, the owner's smartphone becomes a recognized digital key for the car, allowing the owner to use it to unlock and start the car, as well as to share access to the car with other authorized users.

Head unit pairing, on the other hand, refers to the process of connecting a smartphone or other device to the head unit (also known as the infotainment system) of a car. This allows the driver to access the features and functions of their smartphone, such as music, navigation, and phone calls, through the car's display and speakers.

The head unit pairing may be implemented as OOB (Out-of-Band) pairing between the vehicle and the mobile device as part of the digital key owner/friend pairing. For example, Head Unit Pairing messages may be exchanged via one or more wireless communication links established for digital key owner pairing. Examples of such Head Unit Pairing messages defined in Digital Key Technical Specification Release 3, Version 1.0.11 (CCC-TS-101) are Head_Unit_Pairing_Preparation Message (HU-PP) sent by the vehicle to the mobile device, Head Unit Pairing Request Message (HUP-RQ) sent by the mobile device to the vehicle, and/or Head Unit Pairing Response Message (HUP-RS) sent by the vehicle to the mobile device.

However, no further preconditions are defined when exactly such head unit pairing messages shall be sent by the vehicle to the mobile device.

There may be a demand for an improved concept for head unit pairing.

This demand may be satisfied by the subject-matter of the appended independent and dependent claims.

According to a first aspect, the present disclosure provides a communication system for a vehicle.

The communication system comprises a first wireless communication device configured to perform wireless communication in accordance with a first wireless communication protocol.

In some embodiments, the first wireless communication device may be configured to perform wireless communication for a keyless access or keyless go functionality of the vehicle.

In some embodiments, the first wireless communication protocol may be one of a near field communication (NFC), Bluetooth low energy (BLE), or Ultra-Wideband (UWB) communication protocol. Thus, the first wireless communication device may comprise at least one of a NFC, a BLE, or a UWB transceiver of the vehicle to perform wireless communication for a keyless access or keyless go functionality of the vehicle. For example, the first wireless communication device may be integrated into the vehicle.

The communication system also comprises a second wireless communication device configured to perform wireless communication in accordance with a second wireless communication protocol.

In some embodiments, the second wireless communication device may be configured to perform wireless communication for a hands-free functionality, a media playback functionality or a video projection functionality of the vehicle.

In some embodiments, the second wireless communication protocol may be a Bluetooth communication protocol. Bluetooth is a wireless communication technology having a shorter communication range than BLE. Thus, the second wireless communication device may comprise a Bluetooth transceiver. For example, the second wireless communication device may be coupled to or integrated into a head unit of the vehicle.

The first and second wireless communication device may be separate devices installed at different positions/locations within the vehicle.

The communication system further comprises control circuitry configured to perform a first pairing procedure between the first wireless communication device and a mobile device to establish a first communication channel in accordance with the first wireless communication protocol between the first wireless communication device and the mobile device.

In some embodiments, the first pairing procedure may be a digital key owner or friend pairing procedure between the vehicle and the owner's or friend's mobile device (e.g., a smartphone).

The control circuitry is further configured to initiate or attempt a second pairing procedure between the second wireless communication device and the mobile device to establish a second communication channel in accordance with the second wireless communication protocol between the second wireless communication device and the mobile device by sending a pairing preparation message for the second pairing procedure from the first wireless communication device to the mobile device via the first communication channel.

In some embodiments, the second pairing procedure may be a head unit pairing procedure between the vehicle's head unit and the owner's or friend's mobile device, wherein Head Unit Pairing messages are exchanged OOB via the first communication channel established by the digital key owner or friend pairing procedure.

In some embodiments, the pairing preparation message may be indicative of an identifier (address) and communication capabilities of the second wireless communication device. For example, the pairing preparation message may be a Head Unit Pairing Preparation Message (HU-PP) as defined in the Digital Key Technical Specification Release 3, Version 1.0.11 (CCC-TS-101).

The control circuitry is configured to instruct sending the pairing preparation message (only) if it is detected that the second communication channel can be successfully established.

The control circuitry may be integrated into the vehicle and coupled to both the first wireless communication device and the second wireless communication device. For example, the control circuitry may be implemented in an electronic control unit (ECU) of the vehicle.

To detect that the second communication channel can be successfully established, the communication system may further comprise detection circuitry which is configured to detect whether the second wireless communication device is ready for wireless communication over the second communication channel. Here, "ready for wireless communication" may be understood as being prepared or in a state of being able to wirelessly communicate over the second communication channel. For example, the second wireless communication device may have to be powered on and initialized properly. For example, the control circuitry may be configured to instruct sending the pairing preparation message (only) if the second wireless communication device is detected to be ready for wireless communication over the second communication channel. This may avoid initiating the second pairing procedure too early when the second wireless communication device is not in the correct state (not ready/awake yet).

In some embodiments, the detection circuitry may be configured to detect whether the mobile device is located within a distance from the vehicle which is close enough for successfully establishing the second communication channel. For example, the detection circuitry may comprise signal strength detection circuitry, one or more cameras, seat occupation detection circuitry, or other passenger detection mechanisms. The control circuitry may be configured to instruct sending the pairing preparation message at least if the mobile device is detected to be within the distance. For example, the distance may be less than 20 meters, less than 10 meters, less than 5 meters, or less than 2 meters from the vehicle. This may avoid a breakdown of the second communication channel due to a too large communication distance.

In some embodiments, the control circuitry may be configured to instruct sending the pairing preparation message (only) if the second wireless communication device is detected to be ready for wireless communication over the second communication channel and the mobile device is detected to be within the distance.

In some embodiments, the detection circuitry may be configured to detect whether the mobile device is located inside the vehicle. In this case, a successful establishment of the second communication channel may be assumed.

In some embodiments, the control circuitry may be configured to set a time limit in which the first wireless communication device accepts a pairing request message from the mobile device to the first wireless communication device via the first communication channel in response to the pairing preparation message. The time limit may specify a maximum time interval from sending the pairing preparation message to receiving the pairing request message. For example, the maximum time interval may be 30 seconds or less.

In some embodiments, the pairing request message may be indicative of an identifier (address) and communication capabilities of the mobile device. For example, the pairing request message may be a Head Unit Pairing Request Message (HUP-RQ) as defined in the Digital Key Technical Specification Release 3, Version 1.0.11 (CCC-TS-101).

In some embodiments, the control circuitry may be configured to, if no pairing request message is received within the time limit, initiate or attempt a subsequent pairing procedure between the second wireless communication device and the mobile device to establish the second communication channel between the second wireless communication device and the mobile device by sending a subsequent pairing preparation message for the subsequent pairing procedure from the first wireless communication device to the mobile device via the first communication channel (only) if it is (subsequently) detected that the second communication channel can be successfully established. Thus, if no pairing request message is received upon the pairing preparation message, the vehicle may attempt another pairing procedure between the second wireless communication device and the mobile device when the preconditions for successful communication are met.

In some embodiments, the control circuitry may be configured to monitor a duration of the second pairing procedure and abort the second pairing procedure if it exceeds a predetermined maximum pairing duration. The predetermined maximum pairing duration may be 15 seconds or less, for example. Thus, after sending pairing request message, the vehicle and/or mobile device may monitor the duration of the second pairing procedure and abort the second pairing procedure if it exceeds the predetermined maximum pairing duration.

In some embodiments, the control circuitry may be configured to ignore pairing request messages from other mobile devices to the first wireless communication device during the second pairing procedure. In this way, interference from other mobile devices to the second pairing procedure may be avoided.

According to a further aspect, the present disclosure proposes a vehicle comprising the communication system of any one of the disclosed embodiments.

According to a yet further aspect, the present disclosure proposes a communication method for a vehicle. The method includes:
- establishing a first wireless communication channel in accordance with a first wireless communication protocol between a first wireless communication device of the vehicle and a mobile device,
- initiating or attempting a pairing procedure between a second wireless communication device of the vehicle and the mobile device to establish a second wireless communication channel in accordance with a second wireless communication protocol between the second wireless communication device and the mobile device by sending a pairing preparation message for the pairing procedure from the first wireless communication device to the mobile device via the first wireless communication channel,
- the pairing preparation message is sent only if it is detected that the second wireless communication channel can be successfully established.

According to a yet further aspect, the present disclosure proposes a vehicle. The vehicle comprises a wireless communication device which is configured to perform wireless communication for a keyless access or keyless go functionality in accordance with a wireless communication protocol being one of a near field communication, NFC, Bluetooth low energy, BLE, or Ultra-Wideband, UWB, communication protocol. The vehicle comprises a head unit which is configured to perform Bluetooth communication for a hands-free, a media playback or a video projection functionality in accordance with a Bluetooth communication protocol. The vehicle further comprises control circuitry configured to perform a first (digital key) pairing procedure between the wireless communication device and a portable device to establish a wireless communication channel in accordance with the wireless communication protocol between the wireless communication device and the portable device. The control circuitry is also configured to initiate a Bluetooth pairing procedure between the head unit and the portable device to establish a Bluetooth communication channel in accordance with the Bluetooth communication protocol between the head unit and the portable device by sending a head unit pairing preparation message for the Bluetooth pairing procedure from the wireless communication device to the portable device via the established wireless communication channel. The control circuitry is configured to instruct sending the head unit pairing preparation message (only) if it is detected that the Bluetooth communication channel can be successfully established.

According to the present disclosure, the pairing preparation message is only sent when a user is in an appropriate situation or aware to handle eventually appearing user prompts on his/her mobile device or the vehicle's head unit. The second (Bluetooth) pairing procedure will only be initiated when the head unit is in the correct state (HU ready/awake) or when the Bluetooth connection will not break down (customer inside or close to the vehicle, approaches the vehicle). This may avoid several retries necessary until the user's mobile device gets paired successfully.

Some examples of apparatuses, methods and/or computer programs will be described in the following by way of example only, and with reference to the accompanying figures, in which
- Fig. 1: shows a block diagram of an example of a device or vehicle comprising a first and a second wireless communication device;
- Fig. 2: shows a flow chart of an example of a method for pairing a mobile device with a first and a second wireless communication device; and
- Fig. 3: shows a diagram of a message exchange between a mobile device, a wireless communication device for providing a digital car key functionality, and a wireless communication device of a head unit.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Various embodiments of the present disclosure relate to a Head unit Bluetooth Out-of-band Pairing in a Vehicle.

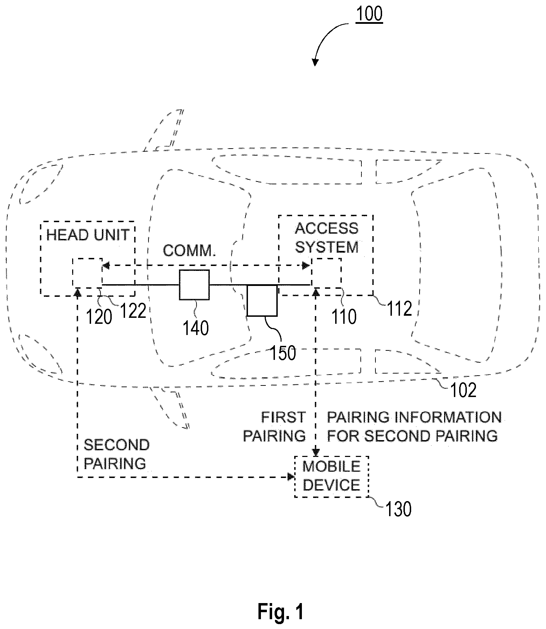

**Fig. 1** shows a block diagram of an example of a communication system 100 in accordance with embodiments of the present disclosure.

The communication system 100 (components thereof) may be installed in a vehicle 102 which is a machine used for transportation on land, water, air, or in space. Examples of vehicles include cars, buses, trucks, boats, airplanes, and spacecraft. In the illustrated example, the vehicle 102 is a car.

The communication system 100 comprises a first wireless communication device 110 which is configured to perform wireless communication in accordance with a first wireless communication protocol. First wireless communication device 110 may include first transceiver circuitry configured for wireless communication in accordance with the first wireless communication protocol or radio access technology (RAT). The first wireless communication device 110 may be part of a keyless access system 112 of the vehicle 102 and be configured to perform wireless communication for a keyless access or keyless go functionality of the vehicle in accordance with the Digital Key standard which allows for the use of smartphones as a key for cars, and the Car Data specification which enables communication between cars and other devices. The first wireless communication device 110 may be configured to perform wireless communication in accordance with one of a NFC, BLE, or UWB communication protocol (or a combination thereof).

The communication system 100 comprises also a second wireless communication device 120 configured to perform wireless communication in accordance with a second wireless communication protocol. Second wireless communication device 120 may include second transceiver circuitry configured for wireless communication in accordance with the second wireless communication protocol or radio access technology (RAT). The second wireless communication device 120 may be installed in the vehicle 102 and be configured to perform wireless communication for a handsfree functionality, a media playback functionality or a video projection functionality of the vehicle. For example, the second wireless communication device 120 may comprise a Bluetooth transceiver coupled to the vehicle's head unit 122 for Bluetooth communication between the head unit 122 and a mobile user device 130 (e.g., smartphone, smartwatch, tablet PC, etc.).

The communication system 100 further comprises control circuitry 140 which is configured to perform a first (wireless) pairing procedure between the first wireless communication device 110 and the mobile user device 130 to establish a first wireless communication channel between the first wireless communication device 110 and the mobile user device 130. The first pairing procedure may be a digital key pairing procedure between the vehicle 102 and the mobile user device 130. Digital key pairing refers to the process of connecting two devices, such as a user's smartphone and a car, using a digital key. This allows the devices to communicate with each other securely and enables certain functions, such as unlocking the car's doors or starting the engine, to be controlled by the smartphone. This process may involve the use of NFC, BLE, or UWB communication technology and requires the devices 110, 130 to be in close proximity to each other. This first pairing procedure (owner/friend pairing) may involve a secure exchange of keys or codes, which establishes a unique, encrypted connection via the first wireless communication channel between the devices.

The control circuitry 140 is further configured to perform a second (wireless) pairing procedure between the second wireless communication device 120 and the mobile user device 130 to establish a second wireless communication channel in accordance with the second wireless communication protocol between the second wireless communication device 120 and the mobile device 130 by sending a pairing preparation message for the second pairing procedure from the first wireless communication device 110 to the mobile device 130 via the first wireless communication channel. The second pairing procedure may take place during or after the first pairing procedure and exchange OOB pairing information via the established first wireless communication channel. For example, the second pairing procedure may be a Bluetooth head unit pairing procedure. Head unit pairing refers to the process of connecting the mobile device 130 such as a smartphone to the head unit 122 in order to play music, make hands-free calls and access other features like navigation. According to the present disclosure, the mobile device 130 and the head unit 122 are connected via the second wireless communication channel in accordance with the second wireless communication protocol, which may be a Bluetooth protocol. However, pairing information may be exchanged out-of-band (OOO) via the first wireless communication channel. Once paired, the user can control the head unit 122 using the mobile device 130, and stream music or access phone features through the car's speakers.

Bluetooth and BLE are both wireless communication technologies that use the same 2.4 GHz radio frequency, but they are designed for different purposes and have some key differences. Bluetooth is a standard for wireless communication that was initially designed for short-range data exchange between fixed and mobile devices. It may be primarily used for audio applications such as wireless speakers, headphones, and hands-free calling, as well as data transfer between devices like smartphones and laptops. Bluetooth has moderate power consumption and a range of about 10 meters. BLE, on the other hand, is a low-power version of Bluetooth that was introduced in 2010. It is designed for low-cost, low-power devices such as fitness trackers, heart rate monitors, and smart home devices. BLE devices are designed to operate for long periods of time on a small battery, and have a range of about 100 meters. BLE is also optimized for low-bandwidth applications and is often used in Internet of Things (IoT) applications. In summary, Bluetooth is a standard for wireless communication that is mainly used for audio and data transfer while BLE is a low-power version of Bluetooth, mainly used for low-bandwidth applications and IoT devices. BLE has a considerably longer communication range than Bluetooth.

If no further preconditions are defined when exactly the pairing preparation message shall be sent by the first wireless communication device 110 to the mobile user device 130, this can lead to scenarios where the user might not be in the appropriate situation/not aware to handle eventually appearing user prompts on his/her mobile user device 130 or the vehicle's second wireless communication device 120. Another problem may be that the first wireless communication device 110 may initiate the second pairing procedure too early when the second wireless communication device 120 is not in the correct state (not ready/awake yet) or when the second wireless communication channel may probably break down (user outside the vehicle, walks away from the vehicle). This can lead to several retries necessary until the user's mobile device 130 gets paired successfully.

Therefore, in accordance with embodiments of the present disclosure, the control circuitry 140 is configured to instruct sending the pairing preparation message only if it is detected that the second wireless communication channel between the second wireless communication device 120 and the mobile user device 130 can be successfully established. For example, the pairing preparation message may only be from the sent from the first wireless communication device 110 to the mobile user device 130 in the case at least one of the following preconditions is met:
- second wireless communication device 120 is awake and its wireless communication function is available,
- the mobile user device 130 is being detected near or inside the vehicle 102.

For this purpose, communication system 100 may further comprise detection circuitry 150 which is configured to detect whether the second wireless communication device 120 is ready for wireless communication over the second wireless communication channel (awake and wireless communication function is available). The control circuitry 140 may be configured to instruct sending the pairing preparation message at least if the second wireless communication device 120 is detected to be ready for wireless communication over the second communication channel. Here, "to be ready" may be understood that the second wireless communication device 120 is prepared or in a state of preparedness for wireless communication over the second communication channel. That is, the second wireless communication device 120 may have all the necessary elements, information or resources to wirelessly communicate over the second communication channel. For example, a device that is ready means it is powered on (awake) and set up to perform its intended function. For example, detection circuitry 150 or parts thereof may be implemented in an electronic control unit (ECU) of the vehicle. The ECU is a computerized device that manages and controls one or more electronic functions in a vehicle or other machinery, such a functions of the first and second wireless communication devices 110, 120. It may use input from various sensors to monitor and adjust various systems, such as engines, transmissions, braking systems, climate control, and the first and second wireless communication devices 110, 120. An ECU is essentially a small computer that uses a microprocessor, memory, and input/output interfaces to execute a program that controls the specific function it manages. It reads sensor data, performs calculations, and sends commands to actuators to control various systems. It can also store and retrieve data, such as error codes and performance data. In this regard, also the control circuitry 140 or parts thereof may be implemented in the ECU.

Alternatively or additionally, the detection circuitry 150 may be configured to detect whether the mobile user device 130 is located within a distance from the vehicle 102 which is close enough for successfully establishing the second communication channel. For this purpose, detection circuitry 150 may use or comprise one or more sensors, such as cameras, seat occupation detection or other passenger detection sensors). Further, options include signal strength measurements (RSSI = Received Signal Strength Indicator) with regards to the first and/or the second wireless communication channel or localization via UWB. A higher RSSI value generally indicates that the device is closer to the signal source and that the signal is stronger, while a lower RSSI value indicates that the device 130 is farther away and that the signal is weaker. UWB transmits data using very low energy levels over a very wide frequency band, typically spanning several gigahertz. This allows it to transmit large amounts of data at high speeds, while also providing high accuracy in location and time-of-flight measurements.

The control circuitry 140 may be configured to instruct the first wireless communication device 110 to send the pairing preparation message for the second pairing procedure at least if the mobile device 130 is detected to be within the distance which is close enough for successfully establishing the second communication channel. Preferably, the control circuitry 130 may be configured to instruct sending the pairing preparation message if the second wireless communication device 120 is detected to be ready for wireless communication over the second communication channel and the mobile user device 130 is detected to be within the distance (near or inside the vehicle 102).

Thus, some embodiments of present disclosure propose that the vehicle's first wireless communication device 110 shall only send the pairing preparation message when the owner device 130 is detected inside the vehicle 102 and the head unit 122 infrastructure including Bluetooth is available and ready for head unit pairing.

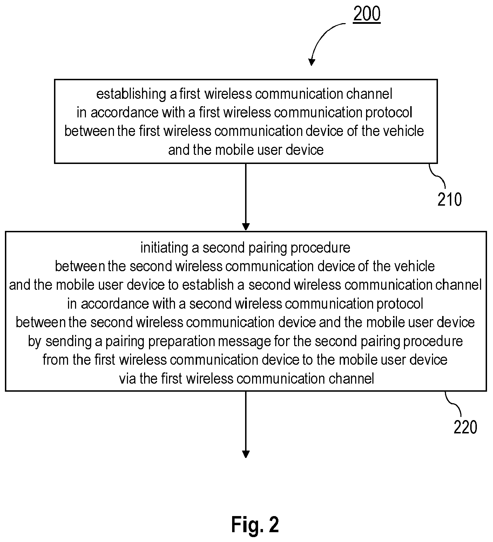

**Fig. 2** shows a flowchart of an example of a corresponding method 200 for pairing a mobile user device 130 with a first and a second wireless communication device 110, 120 of a vehicle. Method 200 may be performed by the components of communication system 100.

The method 200 includes establishing 210 a first wireless communication channel in accordance with a first wireless communication protocol between the first wireless communication device 110 of the vehicle and the mobile user device 130. Establishing 210 the first wireless communication channel may involve performing a first pairing procedure between the first wireless communication device 110 and the mobile user device to establish the first communication channel between the first wireless communication device 110 and the mobile user device 130.

The method 200 also includes initiating a second pairing procedure 220 between the second wireless communication device 120 of the vehicle and the mobile user device 130 to establish a second wireless communication channel in accordance with a second wireless communication protocol between the second wireless communication device 120 and the mobile user device 130 by sending a pairing preparation message for the second pairing procedure from the first wireless communication device 110 to the mobile user device 130 via the first wireless communication channel. The pairing preparation message is sent only if it is detected that the second wireless communication channel can be successfully established.

Various aspects of the present disclosure relate to a system, method and computer program for pairing two wireless communication devices of the communication system 100 or vehicle 102 to a mobile user device 130, in an efficient manner. Such as scenario is present, for example, in a vehicle 102 with an access system 112 that comprises the first wireless communication device (e.g. a NFC, BLE, UWB communication device) 110, and which is used to perform the communication for providing a for a keyless access or keyless go functionality of the vehicle 102, and a head unit 122 that comprises the second wireless communication device (e.g. a Bluetooth communication device) 120, and that is used to perform the communication for a hands-free functionality, a media playback functionality, or a video projection functionality of the vehicle. In other words, the first wireless communication device 110 may be configured to perform communication for a keyless access or keyless go functionality of the vehicle 102. The second wireless communication device 120 may be separate from the first wireless communication device 110. It may be configured to perform communication for a hands-free functionality, a media playback functionality, or a video projection functionality of the vehicle. In general, the access system is provided by the main ECU of the vehicle (that coordinates the driving- and security-related features of the vehicle), and the head unit 122 is the system that provides the user-facing functionality, such as the hands-free functionality, the media playback functionality, or the video projection functionality, but also provides an interface for changing settings of the vehicle. In this context, the video projection functionality relates to a displaying of a user interface of the mobile device via a display of the vehicle (e.g. using Apple CarPlay or Android Auto).

In cars, the first and second wireless communication devices 110, 120 are usually BLE and Bluetooth communication devices. Accordingly, the first and second pairing procedures may be BLE and Bluetooth pairing procedures. Alternatively or additionally, other wireless technologies may be employed. For example, the first wireless communication device 110 may be a Ultra-Wideband communication device, or a combined BLE and UWB communication device. The second wireless communication device 120 may be a Bluetooth communication device and/or a communication device for communicating in a Wireless Local Area Network (e.g. a combined Bluetooth/WLAN communication device). Accordingly, the first pairing procedure may be a first UWB or BLE pairing procedure, and/or the second pairing procedure may be a Bluetooth pairing procedure or a procedure for joining a Wireless Local Area Network.

An idea of the present disclosure is to use the (secure, encrypted) communication channel that is established by the first pairing procedure to exchange pairing messages for the second pairing procedure. In particular, the pairing preparation message for the second pairing procedure is only sent if it is detected that the second communication channel can be successfully established. Accordingly, the first pairing procedure may be performed, and completed, before the exchange of the pairing messages for the second pairing procedure is performed. The control circuitry 140 is configured to perform the first (wireless) pairing procedure between the first wireless communication device 110 and the mobile device 130 to establish the first communication channel between the first wireless communication device 110 and the mobile device 130. As has been mentioned above, the first pairing procedure may be a first Bluetooth pairing procedure, or a first UWB pairing procedure. The first pairing procedure may establish the (secure, encrypted) first wireless communication channel. Accordingly, the first pairing procedure may comprise the exchange of cryptographic information, e.g. based on a Diffie-Hellman key exchange.

Once the first wireless communication channel is established, it can be used to initiate or perform the second pairing procedure. The control circuitry 130 is configured to perform the second pairing procedure between the second wireless communication device 120 and the mobile user device 130 by exchanging the pairing messages for pairing the second wireless communication device 120 with the mobile user device 130 via the first wireless communication channel between the first wireless communication device 110 and the mobile user device 130. In other words, the pairing messages are exchanged between the second wireless communication device 120 and the mobile user device 130 via the first wireless communication device 110. Accordingly, the first and second wireless communication devices 110, 120 may be coupled, at least via the control circuitry 140. For example, the pairing messages may be exchanged via an internal communication channel between the first wireless communication device 110 and the second wireless communication device 120 (and the first wireless communication channel between the first wireless communication device 110 and the mobile user device).

The exchange of the pairing messages over the (established) first communication channel enables the automation of the second pairing procedure. The pairing messages may be initiated only if it is detected that the second communication channel can be successfully established. The user may be prompted whether the second pairing procedure is to be performed. In other words, the second pairing procedure may be initiated automatically if it is detected that the second communication channel can be successfully established, e.g. by providing a prompt to the user of the mobile device 130 or the vehicle, and/or without requiring the user to initiate the pairing procedure from the mobile device. In particular, the second pairing procedure may be initiated without requiring a confirmation of a code sequence by a user of the mobile device 130 or the vehicle.

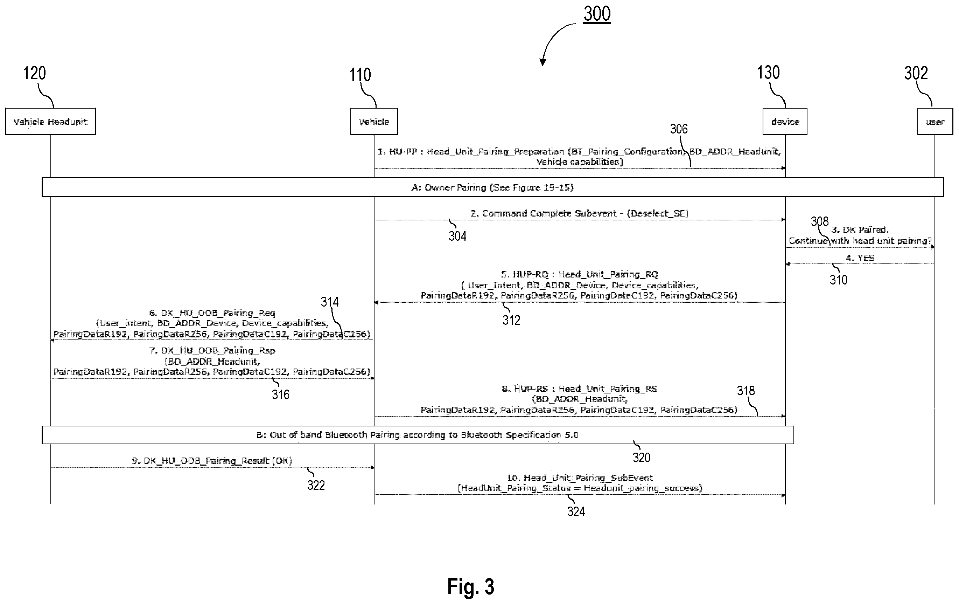

While the principle of the proposed concept is also applicable to other wireless technologies, such as WLAN, the following description assumes, in part, that the second pairing procedure is a Bluetooth pairing procedure. However, the same information can also be exchanged in a pairing procedure to be performed for a different wireless technology. The Bluetooth standard already comprises a section that relates to Out-of-Band pairing, that can be employed by the technologies presented in the present disclosure. Accordingly, the pairing messages may comprise out-of-band pairing messages according to the Bluetooth standard. An illustration of the second pairing procedure that is based on the Bluetooth OOB-Pairing procedure is shown in Fig. 3.

**Fig. 3** shows a diagram of a message exchange 300 between a mobile user device 130, a first wireless communication device 110 for providing a digital car key functionality, and a second wireless communication device 120 of a head unit 122. For example, Fig. 3 may show a combined pairing of a digital car key (i.e. the access system 112) and a head unit (122). Fig. 3 shows different entities: A user 302 of a (mobile) user device 130, the user device 130, the vehicle's digital key wireless communication device 110 (i.e. the first wireless communication device 110 of the access system 112) and the vehicle's head unit wireless communication device 120 (i.e. the second wireless communication device 120 of the head unit 122).

First, the pairing of the DCK (Digital Car Key) is performed, resulting in a "Subevent Notification" (that the operation is successful) 304 from the vehicle's digital key wireless communication device 110 to the user device 304. During or after the pairing of the DCK, the pairing of the head unit 122 is initiated, starting with a Head_Unit_Pairing_Preparation Message (HU-PP) message 306 from the vehicle's digital key wireless communication device 110 to the user device 130. The Head _Unit_Pairing _Preparation Message (HU-PP) message 306 may be indicative of an identifier and communication capabilities of the vehicle's head unit wireless communication device 120. In particular, the Head_Unit_Pairing_Preparation Message (HU-PP) may contain BT_Pairing_Configuration, BD_ADDR_Head_Unit, and vehicle capabilities as shown in the following tables:

**Table 1: HU_PP message and its parameters**

| **Message** | **Message ID** | **Parameter** |
|---|---|---|
| Head_Unit_Pairing_Preparation (HU-PP) | 0x16 | BT_Pairing_Configuration, ED_ADDR_Head_Unit, Vehicle capabilities |

**Table 2: Definition of the parameter for HU_PP**

| **Parameter** | **Length (bytes)** | **Description** |
|---|---|---|
| BT_Pairing_Configuration | 1 | BitMask for supported capabilities: |
| | | OOB_Configuration: |
| | | Bit[0] : Value = 0. The vehicle head unit only supports OOB communication from vehicle head unit to device. |
| | | Bit[0] : Value = 1. The vehicle head unit supports OOB communication for both directions. |
| | | Bit[1-7]: Reserved |
| BD_ADDR_Head_Unit | 6 | Bluetooth Device Address of the head unit as defined in Volume 2 Part H of [30] |
| Vehicle capabilities | 2 | BitMask for supported capabilities on vehicle |
| | | Bit [1]: Value = 0: Head unit Bluetooth Classic (A2DP and HFP) pairing not supported |
| | | Bit [1]: Value = 1: Head unit Bluetooth Classic (A2DP and HFP) pairing supported |
| | | Bit [2]: Value = 0: Apple Carptay not supported |
| | | Bit [2]: Value = 1: Apple Carplay Supported |
| | | Bit [3]: Value = 0: Android Auto Not Supported |
| | | Bit [3]: Value = 1: Android Auto Supported |
| | | Bit[4:15]: Reserved |

According to embodiments of the present disclosure, the Head_Unit_Pairing_Preparation Message (HU-PP) is only sent from the vehicle's digital key wireless communication device 110 over the first wireless communication channel (e.g., BLE) if it is determined that the second wireless (e.g., Bluetooth) communication channel between the vehicle's head unit wireless communication device 120 and the user device 130 can be successfully established. This may be determined by employing detection circuitry 150 directly or indirectly interfacing with the vehicle's head unit wireless communication device 120 and/or the mobile user device 130 as explained previously.

In case the second wireless (e.g., Bluetooth) communication channel between the vehicle's head unit wireless communication device 120 and the user device 130 can be successfully established (e.g., device 120 is ready/awake and mobile user device 130 is located near or in the vehicle 102), the Head_Unit_Pairing_Preparation Message (HU-PP) is transmitted in preparation of the pairing of the head unit 122, which includes the capabilities of the vehicle, in particular of the head unit of the vehicle. In other words, the control circuitry 140 may be configured to instruct the vehicle's digital key wireless communication device 110 to transmit information on one or more capabilities of the vehicle's head unit wireless communication device 120 to the user device 130 via the first communication channel (as part of the exchange of pairing information) if it is detected that the second communication channel can be successfully established.

At 308, the user device 130 notifies the user 302 that vehicle's digital key wireless communication device 110 is paired (i.e. that the first pairing procedure is completed), and prompts the user 302 whether to continue with the pairing of the head unit. At 310, the user 302 responds with a "yes, continue", and the user device 130 may provide a Head Unit Pairing Request Message (HUP-RQ) 312 to the vehicle's digital key wireless communication device 110 (via the established first communication channel). The Head Unit Pairing Request Message (HUP-RQ) may be indicative of an identifier (address) and communication capabilities of the user device 304. In particular, the Head Unit Pairing Request Message (HUP-RQ) may contain User Intent, BD_ADDR_Device, and Device Capabilities as shown in the following tables:

**Table 3: HUP_RQ message and its parameters**

| **Message** | **Message ID** | **Parameter** |
|---|---|---|
| Head_Unit_Pairing_RQ (HUP-RQ) | 0x17 | User Intent, BD_ADDR_Device, Device Capabilities, PairingDataR192, PairingDataR256, PairingDataC 192, PairingDataC256 |

**Table 4: Definition of the parameter for HUP_RQ.**

| **Parameter** | **Length(bytes)** | **Description** |
|---|---|---|
| User Intent | 2 | BitMask for user intent coming from device. |
| | | Bit [0]: Value =0: Intent from device |
| | | Bit [0]: Value =1: No intent from device |
| | | Bit [1]: Value = 0: Head unit Bluetooth Classic usage not intended from user. |
| | | Bit [1]: Value = 1: Head unit Bluetooth Classic usage intended from user |
| | | Bit [2]: Value = 0: Apple Carplay usage not intended from user |
| | | Bit [2]: Value = 1: Apple Carplay usage intended from user |
| | | Bit [3]: Value = 0: Android Auto usage not intended from user |
| | | Bit [3]: Value = 1: Android Auto usage intended from user |
| | | Bit [4-15]: Reserved |
| BD_ADDR_Device | 6 | Bluetooth Device Address of the device as defined in Volume 2 Part H of [30]. |
| Device Capabilities | 2 | BitMask for supported capabilities on device |
| | | Bit [1]: Value = 0: Head unit Bluetooth Classic (A2DP and HFP) not supported |
| | | Bit [1]: Value = 1: Head unit Bluetooth Classic (A2DP and HFP) supported |
| | | Bit [2]: Value = 0: Apple Carplay not supported |
| | | Bit [2]: Value = 1: Apple Carplay supported |
| | | Bit [3]: Value = 0: Android Auto not supported |
| | | Bit [3]: Value = 1: Android Auto supported |
| | | Bit[4-15]: Reserved |
| PairingDataR192 | 16 | Simple Pairing Randomizer R-192^{∗} |
| PairingDataR256 | 16 | Simple Pairing Randomizer R-256* |
| PairingDataC192 | 16 | Simple Pairing Hash C-192* |
| PairingDataC256 | 16 | Simple Pairing Hash C-256* |

In other words, the user device 130 provides a pairing request message for pairing with the head unit 122 to the vehicle's digital key wireless communication device 110, stating the capabilities of the user device 130, whether to use a vehicular display for displaying information provided by the mobile device (i.e. to use the video projection functionality), e.g. using CarPlay (CP) or Android Auto (AA), and the device identifier of the mobile device 130. In other words, the control circuitry 140 may be configured to obtain a pairing request message for pairing the user device 130 with the vehicle's head unit wireless communication device 120 from the user device 130 via the first communication channel. The pairing request message may comprise (information on) one or more capabilities of the user device 130. The pairing request message may further comprise information on whether the user device 130 requests to use a vehicular display for displaying information provided by the user device 130 (i.e. to use the video projection functionality).

The control circuitry 140 may be configured to set a time limit in which the vehicle's digital key wireless communication device 110 accepts a Head Unit Pairing Request Message (HUP-RQ) from the user device 130 via the first communication channel in response to the Head_Unit_Pairing_Preparation Message (HU-PP). The time limit specifies a maximum time interval (e.g. 30 seconds) from sending the Head _Unit_Pairing _Preparation Message (HU-PP) to receiving the Head Unit Pairing Request Message (HUP-RQ).

If no Head Unit Pairing Request Message (HUP-RQ) is received within the time limit, the control circuitry 140 may be configured to re-initiate a subsequent pairing procedure between the vehicle's head unit wireless communication device 120 and the user device 130 to establish the second communication channel between the vehicle's head unit wireless communication device 120 and the user device 130 by sending a subsequent Head_Unit_Pairing_Preparation Message (HU-PP) for the subsequent pairing procedure from the vehicle's digital key wireless communication device 110 to the user device 130 via the first (digital key) communication channel if it is subsequently detected that the second communication channel can be successfully established.

After sending Head Unit Pairing Request Message (HUP-RQ), the control circuitry 140 and device 130 may monitor the duration of the second pairing process and abort the second pairing process if it exceeds a predetermined duration (e.g.,15 seconds). During the second pairing process, further Head Unit Pairing Request Messages (HUP-RQ) may be ignored by the control circuitry 140 to avoid other devices to interfere with the second pairing process. During this time, Head_Unit_Pairing_Preparation Messages (HU-PP) to other devices may be delayed therefore until the running pairing process with the current device 130 is finished. If the second (Bluetooth) pairing process gets aborted at this point by exceeding the timers limit, the device 130 may instantly retry pairing, by Head Unit Pairing Request Message (HUP-RQ) again using the stored user consent.

At 314, the vehicle's digital key wireless communication device 110 transforms the received Head Unit Pairing Request Message (HUP-RQ) into a "DK_HU_OOB_Pairing_Req(Device_Capabilities, User_Intent (CP, AAP or Bluetooth only), Device_BT_MAC_Address)" (DK to Head Unit Out of Band Pairing Request). In other words, the control circuitry 140 may be configured to provide the request to the vehicle's head unit wireless communication device 120 (as message 314), and to provide a response to the request from the vehicle's head unit wireless communication device 120 to the mobile device 130 via the first communication channel (via messages 316 and 318 as shown in the following). The vehicle's head unit wireless communication device 120 may accordingly provide the response to the request to the device 130, via the vehicle's digital key wireless communication device 110, using messages 316, 318 "DCK_HU_OOB_Pairing_Resp (Vehicle_BT_MAC_Address, PairingDataP192, PairingDataP256)" and "Headunit_Pairing_Resp (Vehicle_BT_MAC_Address, PairingDataP192, PairingDataP256), which includes the Media Access Control Address of the vehicle headunit 120, 122 and a cryptographic secret (PairingDataP 192, PairingDataP256, cryptographic information for establishing 192 bit and 256 bit Elliptic Curve Diffie Hellman encryption) for establishing a cryptographic channel (according to the Bluetooth OOB pairing specification). Accordingly, the response may comprise information on a cryptographic secret provided by the second Bluetooth communication device, e.g. a cryptographic secret for establishing the further secure, encrypted communication channel directly between the vehicle's head unit wireless communication device 120 device and the mobile device 130.

Once this information is exchanged, Bluetooth Out of Band pairing 320 may be performed (to perform the second pairing procedure). To confirm the successful pairing, the vehicle's head unit wireless communication device 120 may transmit a confirmation message "DCK_HU_OOBPairing_Result(OK)" 322 to the device 130, via the vehicle's digital key wireless communication device 110, which may transform message 322 into "Headunit_Pairing_Result(OK)" 324 and transmit it to the device 130 via the first communication channel. The device 130 may provide feedback to the user 302 (if needed).

For example, the described owner pairing of the digital key can be used in the following cases.

During the Owner pairing (and also during the combined HU pairing) of the Digital Key, the user may sit in the vehicle with his/her smart device and two key fobs at hand, following the pairing process on the HU and on the smart device. During this process the HU_PP command will be sent to the smart device for an BT Classic OOO pairing over Bluetooth Low energy(BLE) and the user prompt to also pair the smart device to the HU (via BT Classic/ HU's BT) will appear after the successful DK owner pairing. During this process the described preconditions (e.g., HU is ready/awake and mobile user device is located near or in the vehicle 102) are usually fulfilled as the HU is in an operable mode and the device is detected inside the vehicle (via e.g. UWB, BT RSSI signal strength, vehicle passenger camera, seat occupation detection or other passenger detection mechanisms).

During a friend sharing, for example, the friend can be anywhere and probably not in the owner's vehicle when receiving a shared key from the owner. When the key sharing is accepted, the friend is also being asked if to pair the smart device against the HU via Carplay or Bluetooth classic (via OutOfBand paring via BLE) the first time the vehicle is entered. The friend approaches the vehicle for the first time at any point in time, so it is crucial that HU_PP command is not sent too early e.g. if the friend's smart device has BLE connection only, as this is no sufficient indicator for the friend in the proper situation to pair the device to the HU. For example, the friend may approach the vehicle but then decides to leave again without entering the vehicle. In this case, the conventional pairing process might be aborted due to BT classic/BLE connection break down. This may be improved with the pairing process proposed herein.

As has been pointed out before, the same concept may also be used with other wireless technologies. For example, if the second wireless communication device is a wireless communication device for communication in a wireless local area network, the exchange of the pairing information may comprise information on a service set identifier (SSID) of a wireless network, and cryptographic information on a shared key used for communication in the wireless network.

The control circuitry may be a part of the first wireless communication device, or co-located with the first wireless communication device, e.g. within the access system / main ECU of the vehicle. Alternatively, the control circuitry may be a part of the second wireless communication device, or co-located with the second wireless communication device, e.g. within the head unit of the vehicle. Alternatively, the control circuitry may be separate from both the first wireless communication device (and the access system) and the second wireless communication device (and the head unit).

In various examples, the control circuitry 10 may be implemented using one or more processing units, one or more processing devices, any means for processing, such as a processor, a computer or a programmable hardware component being operable with accordingly adapted software. In other words, the described function of the control circuitry 10 may as well be implemented in software, which is then executed on one or more programmable hardware components. Such hardware components may comprise a general-purpose processor, a Digital Signal Processor (DSP), a micro-controller, etc.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### List of reference numerals

- 100: communication system
- 102: vehicle
- 110: first wireless communication device
- 112: keyless access system
- 120: second wireless communication device
- 122: head unit
- 130: mobile device
- 140: control circuitry
- 150: detection circuitry
- 200: communication method
- 210: establishing a first wireless communication channel
- 220: initiating a pairing procedure between a second wireless communication device and the mobile device
- 300: message sequence chart between a mobile user device, a first wireless communication device for providing a digital car key functionality, and a second wireless communication device of a head unit

## Claims

1. A communication system (100) for a vehicle (102), comprising
a first wireless communication device (110) configured to perform wireless communication in accordance with a first wireless communication protocol;
a second wireless communication device (120) configured to perform wireless communication in accordance with a second wireless communication protocol; and
control circuitry (140) configured to:
perform a first pairing procedure between the first wireless communication device (110) and a mobile device (130) to establish a first communication channel in accordance with the first wireless communication protocol between the first wireless communication device (110) and the mobile device (130),
initiate a second pairing procedure between the second wireless communication device (120) and the mobile device (130) to establish a second communication channel in accordance with the second wireless communication protocol between the second wireless communication device (120) and the mobile device (120) by sending a pairing preparation message (306) for the second pairing procedure from the first wireless communication device (110) to the mobile device (130) via the first communication channel,
wherein the control circuitry (140)) is configured to instruct sending the pairing preparation message (306) if it is detected that the second communication channel can be successfully established.

2. The system (100) of claim 1, further comprising detection circuitry (150) configured to detect whether the second wireless communication device (120) is ready for wireless communication over the second communication channel, wherein the control circuitry (140) is configured to instruct sending the pairing preparation message (306) at least if the second wireless communication device (120) is detected to be ready for wireless communication over the second communication channel.

3. The system (100) of claim 2, wherein the detection circuitry (150) configured to detect whether the mobile device (130) is located within a distance from the vehicle (102) which is close enough for successfully establishing the second communication channel, wherein the control circuitry (140) is configured to instruct sending the pairing preparation message (306) at least if the mobile device (130) is detected to be within the distance.

4. The system (100) of claim 3, wherein the control circuitry (140) is configured to instruct sending the pairing preparation message (306) if the second wireless communication device (120) is detected to be ready for wireless communication over the second communication channel and the mobile device (130) is detected to be within the distance.

5. The system (100) of claim 3 or 4, wherein the detection circuitry (150) configured to detect whether the mobile device (130) is located inside the vehicle (102).

6. The system (100) of any one of the previous claims, wherein the control circuitry (140) is configured to set a time limit in which the first wireless communication device (110) accepts a pairing request message (312) from the mobile device (130) to the first wireless communication device (110) via the first communication channel in response to the pairing preparation message (306), wherein the time limit specifies a maximum time interval from sending the pairing preparation message (306) to receiving the pairing request message (312).

7. The system (100) of claim 6, wherein the control circuitry (140) is configured to, if no pairing request message (312) is received within the time limit, initiate a subsequent pairing procedure between the second wireless communication device (120) and the mobile device (130) to establish the second communication channel between the second wireless communication device (120) and the mobile device (130) by sending a subsequent pairing preparation message for the subsequent pairing procedure from the first wireless communication device (110) to the mobile device (130) via the first communication channel if it is subsequently detected that the second communication channel can be successfully established.

8. The system (100) of claim 6 or 7, wherein the pairing request message (312) is indicative of an identifier and communication capabilities of the mobile device (130).

9. The system (100) of any one of the previous claims, wherein the control circuitry (140) is configured to monitor a duration of the second pairing procedure and to abort the second pairing procedure if it exceeds a predetermined maximum pairing duration.

10. The system (100) of any one of the previous claims, wherein the control circuitry (140) is configured to ignore pairing request messages from other mobile devices to the first wireless communication device during the second pairing procedure.

11. The system (100) of any one of the previous claims, wherein the pairing preparation message is indicative of an identifier and communication capabilities of the second wireless communication device (120).

12. The system (100) of any one of the previous claims, wherein the first wireless communication device (110) is configured to perform wireless communication for a keyless access or keyless go functionality of the vehicle and wherein the second wireless communication device (120) is configured to perform wireless communication for a hands-free functionality, a media playback functionality or a video projection functionality of the vehicle.

13. The system (100) of any one of the previous claims, wherein the first wireless communication protocol is one of a near field communication, NFC, Bluetooth low energy, BLE, or Ultra-Wideband, UWB, communication protocol.

14. The system (100) of any one of the previous claims, wherein the second wireless communication protocol is a Bluetooth communication protocol.

15. A communication method (200) for a vehicle, comprising
establishing (210) a first wireless communication channel in accordance with a first wireless communication protocol between a first wireless communication device of the vehicle and a mobile device,
initiating (220) a pairing procedure between a second wireless communication device of the vehicle and the mobile device to establish a second wireless communication channel in accordance with a second wireless communication protocol between the second wireless communication device and the mobile device by sending a pairing preparation message for the pairing procedure from the first wireless communication device to the mobile device via the first wireless communication channel,
wherein the pairing preparation message is sent only if it is detected that the second wireless communication channel can be successfully established.
